# FASCICULE DE BREVET EUROPEEN

(11) **EP 4 574 579 B1**
(45) Date de publication et mention de la délivrance du brevet: **24.06.2026**
(21) Numéro de dépôt: 24219699.6
(22) Date de dépôt: 13.12.2024
(51) Int. Cl.: B60R 21/205, B60R 21/215

(54) **AGENCEMENT D'UNE PLANCHE DE BORD D'UN VÉHICULE AUTOMOBILE**
ARMATURENBRETTANORDNUNG FÜR EIN KRAFTFAHRZEUG
ARRANGEMENT OF A DASHBOARD OF A MOTOR VEHICLE

(30) Priorité: 22.12.2023 FR 2315095
(43) Date de publication de la demande: 25.06.2025
(73) Titulaire: Renault s.a.s, 92100 Boulogne Billancourt (FR)
(72) Inventeur: CHAPUIS, Claude-Emman, 78280 GUYANCOURT (FR); DAGOREAU, Alain, 78280 GUYANCOURT (FR)

(56) Documents cités:
- EP-B1- 2 193 052
- US-A1- 2011 109 067
- US-B1- 9 975 514

## Description

La présente invention se rapporte à un agencement d'une planche de bord d'un habitacle de véhicule automobile comprenant un système de sécurité à coussin gonflable.

Dans le domaine des véhicules automobiles, les planches de bord sont installées, supportées par une traverse structurelle, transversalement dans l'habitacle, à l'avant des places du conducteur et du passager avant. La planche de bord est notamment réceptrice, du côté conducteur, du tableau de bord et des indicateurs de conduite, en partie centrale, d'un écran permettant par exemple le contrôle de divers paramètres du véhicule, de la climatisation, d'aide à la navigation, et du côté passager, du système de sécurité à coussin gonflable frontal du passager et éventuellement d'un écran supplémentaire.

Des systèmes de sécurité à coussin gonflable (dit communément « airbag » selon le terme équivalent en anglais) sont généralement disposés dans l'habitacle d'un véhicule automobile pour protéger les passagers en cas de choc violent, en s'interposant entre ces derniers et tout élément intérieur constitutif du véhicule automobile, potentiellement dangereux. Ces systèmes de sécurité sont maintenant bien connus. EP2193052 divulgue un agencement d'une planche de bord comportant un système de sécurité à coussin gonflable, configuré pour s'étendre dans l'habitacle d'un véhicule automobile comprenant :
- un corps structurel comportant une paroi ayant une partie avant et une partie arrière, une zone ouverte apte à déboucher dans ladite paroi du corps structurel, et au moins un logement qui loge ledit système de sécurité à coussin gonflable avec un volet fermant au moins en partie ladite zone ouverte étant apte à s'ouvrir par basculement dirigé de l'arrière vers l'avant, autour d'un élément de solidarisation retenant ledit volet, sous la poussée du coussin en déploiement lors du déclenchement du système de sécurité, ledit logement avec ledit volet et ladite zone ouverte définissant un canal de déploiement dudit système de sécurité positionné à l'arrière de ladite partie de paroi avant du corps structurel,
- un ensemble décoratif comportant un support de décor comprenant une première et une deuxième face opposées, et un revêtement décoratif revêtant la première face dudit support de décor, et la deuxième face dudit support de décor étant disposée sur ladite paroi dudit corps structurel de sorte qu'une zone de l'ensemble décoratif recouvre ledit canal de déploiement du système de sécurité.

Le système de sécurité à coussin gonflable frontal du passager équipant la planche de bord comprend un contenant dans lequel se situe le coussin, dit aussi sac, à gonfler par une cartouche de gaz activée par un déclencheur, généralement de type pyrotechnique, pour le déclencher. Ce contenant avec le coussin s'insère dans un logement prévu à cet effet dans le corps structurel de la planche de bord, qui débouche dans une partie de paroi spécifique ouverte ou frangible du corps structurel de la planche de bord, ce logement et la partie spécifique du corps de la planche de bord dédié forme le canal de déploiement de l'airbag. Le contenant du système est fixé au logement du corps de la planche de bord, et l'ouverture du contenant est fermée par un volet formé d'un seul vantail ou de deux vantaux, mobiles en rotation suivant un axe latéral pour s'ouvrir lors de la propulsion du coussin en cas de détection d'un choc. La partie décorative de la planche de bord qui revêt le corps de la planche recouvre notamment ladite partie spécifique ouverte ou frangible du corps de la planche de bord, autrement dit elle recouvre le canal de déploiement de l'airbag et le volet.

De façon connue, pour le déploiement du coussin gonflable, une zone dite « frangible » ou « fusible », c'est-à-dire adaptée à se rompre par exemple en se déchirant ou en éclatant facilement sous la poussée du volet lors du déploiement du coussin gonflable, est nécessaire dans la partie décorative, en surface de la planche de bord, qui recouvre le corps de la planche à proximité du système de sécurité pour permettre la sortie du coussin en déploiement, notamment celle recouvrant le canal de déploiement. Il faut donc prévoir au moins une zone décorative frangible par exemple conçue à partir de matériaux fragiles et/ou en prévoyant des aménagements tels qu'un amincissement local dans l'épaisseur de la partie décorative, par exemple par découpe, pour que la zone se brise facilement.

En outre, des contraintes techniques s'imposent afin de respecter le cahier des charges du déploiement de l'airbag (vitesse, effort de poussée, agressivité sur sac, direction de sortie, etc...). Il est ainsi nécessaire de valider le bon fonctionnement de l'airbag pour chaque décor.

Cette conception de planche de bord en partie latérale comprenant un airbag frontal, côté passager, multiplie les validations obligatoires du fonctionnement de l'airbag, limite le choix des possibilités de décor, tout en imposant des contraintes structurelles de la partie décorative. En outre, elle conduit à la destruction de la structure de la planche de bord dont la partie décorative, en cas de choc déclenchant l'airbag.

Il existe donc un besoin pour répondre aux inconvénients de l'art antérieur.

Un but de l'invention est de permettre de faire n'importe quel type de décor d'une planche de bord dans une partie comportant un airbag. Un autre but est d'éviter la destruction de la structure de la planche de bord dont la partie décorative.

A cet effet, l'invention fournit un agencement d'une planche de bord comportant un système de sécurité à coussin gonflable, configuré pour s'étendre dans l'habitacle d'un véhicule automobile, en particulier à l'arrière du pare-brise et en direction du siège passager avant, ledit agencement comprenant :
- un corps structurel comportant une paroi ayant une partie avant et une partie arrière, une zone ouverte et/ou une zone frangible aptes à déboucher dans ladite paroi du corps structurel, et au moins un logement qui loge ledit système de sécurité à coussin gonflable avec un volet (410) fermant au moins en partie ladite zone ouverte et/ou situé sous ladite zone frangible et étant apte à s'ouvrir par basculement dirigé de l'arrière vers l'avant, autour d'un élément de solidarisation retenant ledit volet, sous la poussée du coussin en déploiement lors du déclenchement du système de sécurité, ledit logement avec le volet et ladite zone ouverte et/ou ladite zone frangible définissant un canal de déploiement dudit système de sécurité positionné à l'arrière de ladite partie de paroi avant du corps structurel,
- un ensemble décoratif comportant un support de décor comprenant une première et une deuxième face opposées, et un revêtement décoratif revêtant la première face dudit support de décor, et la deuxième face dudit support de décor étant disposée sur ladite paroi dudit corps structurel de sorte qu'une zone de l'ensemble décoratif recouvre ledit canal de déploiement du système de sécurité. Ledit ensemble décoratif est solidarisé à la paroi dudit corps structurel par des moyens de retenue libérables sous la poussée du volet lors du déclenchement du système de sécurité, et l'extrémité avant dudit ensemble décoratif est maintenue à la partie de paroi avant dudit corps structurel par au moins une liaison charnière autorisant un basculement de l'ensemble décoratif dirigé de l'arrière vers l'avant sous la poussée du volet lors du déclenchement du système de sécurité en le retenant à la partie de paroi avant dudit corps structurel.

Ainsi, ledit ensemble décoratif est désolidarisé du corps structurel à l'arrière de ladite au moins une liaison charnière par libération desdits moyens de retenue et entrainé en basculement vers l'avant, sous la poussée du volet lors du déclenchement du système de sécurité.

Les termes « avant » et « arrière » font référence à l'avant et à l'arrière de l'agencement de la planche de bord telle qu'installée dans un véhicule automobile. De manière préférée, lesdits moyens de retenue libérables comprennent des éléments de retenue supportés par la deuxième face du support de décor, chaque élément de retenue comportant une extrémité allongée, dirigée vers l'avant, s'insérant à force dans des logements respectifs prévus dans la paroi du corps structurel, lesdits logements comportant chacun une partie de forme allongée complémentaire de celle de ladite extrémité dudit élément de retenue.

En particulier, ledit agencement comprend au moins deux moyens de retenue libérables espacés l'un de l'autre et proximaux de l'extrémité arrière du support de décor, et au moins deux autres moyens de retenue libérables espacés l'un de l'autre et situés entre l'avant du canal de déploiement du système de sécurité et ladite au moins une liaison charnière retenant l'ensemble décoratif à la partie de paroi avant du corps structurel.

L'invention présente l'avantage que tout type de revêtement décoratif peut être appliqué. Selon un mode de réalisation préféré, le revêtement décoratif comprend au moins une couche de matière souple, en particulier de type mousse.

De préférence, le support de décor est en une matière rigide.

De préférence, ladite liaison charnière retenant l'ensemble décoratif à la partie de paroi avant du corps structurel comprend une sangle fixée d'une part à la paroi du corps structurel et d'autre part à l'ensemble décor.

L'invention a également pour objet un véhicule automobile comprenant une planche de bord qui comprend au moins un agencement tel que décrit précédemment, ledit agencement s'étendant au moins sur une partie latérale de la planche de bord, et en particulier à l'arrière du pare-brise et en direction du siège passager avant. Avantageusement, ladite planche de bord s'étend transversalement sur toute la largeur de l'habitacle à l'arrière du pare-brise, ladite planche de bord comportant un décor, au moins sur toute sa surface libre, identique à celui du revêtement décoratif dudit agencement.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1A] est une vue en coupe longitudinale dans le plan vertical XZ d'un agencement de planche de bord comportant un système de sécurité à coussin gonflable (airbag), en position usuelle quand ledit système de sécurité est inactivé, selon un mode de réalisation de l'invention.
[Fig. 1B] est une vue de détails de la figure 1A.
[Fig. 2A] est une vue en coupe longitudinale dans le plan vertical XZ de l'agencement de planche de bord de la figure 1A, en cours de basculement de l'ensemble décor, au début du déploiement de l'airbag.
[Fig. 2B] est une vue de détails de la figure 2A.
[Fig. 3] est une vue en coupe longitudinale dans le plan vertical XZ de l'agencement de planche de bord des figures 1A et 2A, en fin de basculement de l'ensemble décor, après déploiement de l'airbag.
[Fig.4] est une vue en perspective d'un repère orthonormé classique XYZ d'un véhicule automobile.

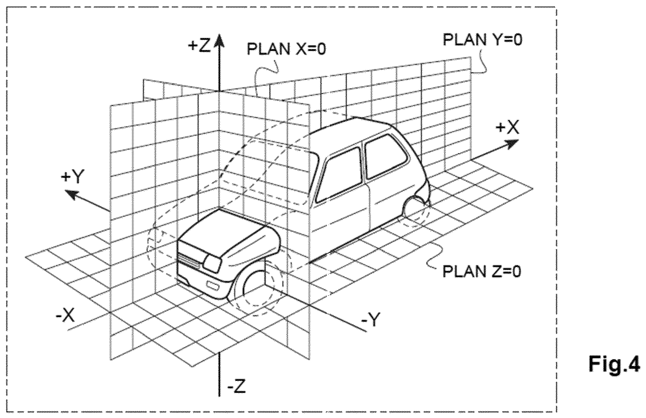

Les orientations exprimées dans la description des figures sont données en référence à un repère orthonormé XYZ d'un véhicule automobile selon la figure 4, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

Les orientations de l'agencement décrit font donc référence à ces orientations, les termes avant et arrière étant aussi indiqués en référence à l'avant et à l'arrière du véhicule automobile.

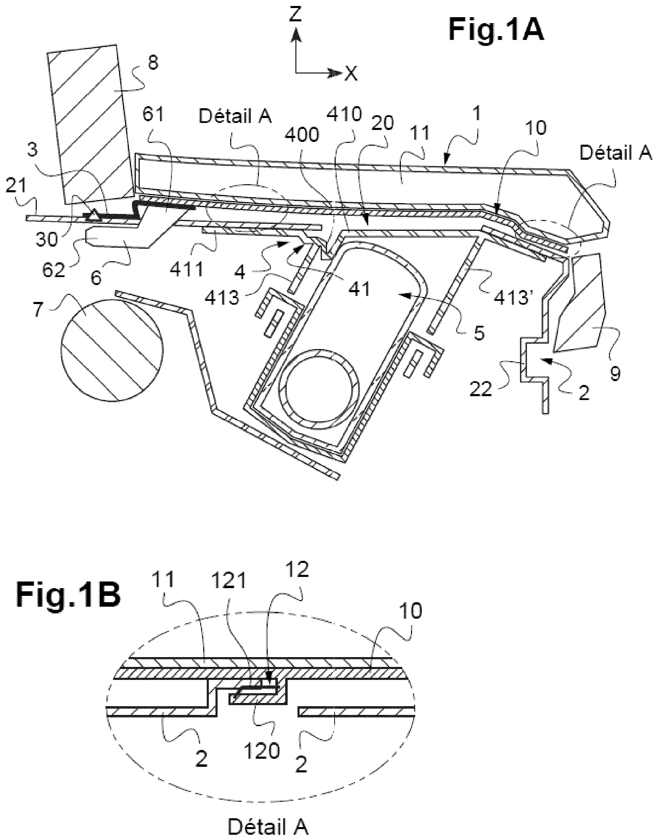

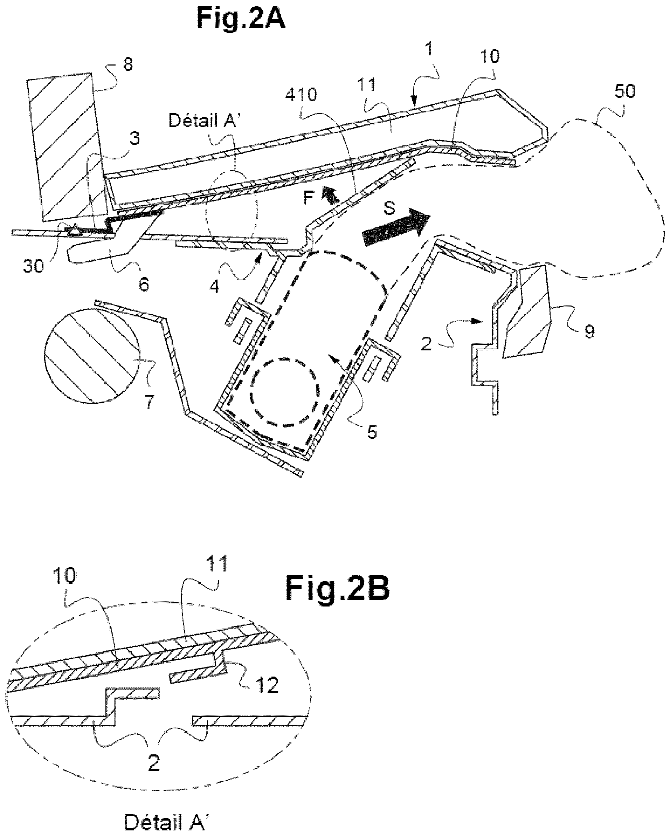

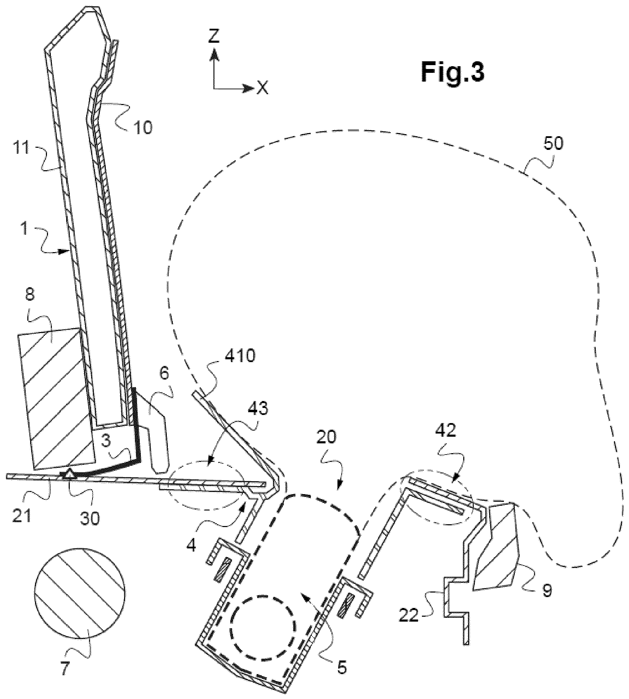

Les figures 1A-1B, 2A-2B et 3 illustrent un agencement d'une planche de bord selon un mode de réalisation de l'invention, à différentes étapes du déploiement du coussin d'un système de sécurité à coussin gonflable, les figures 1A et 1B correspondant au système de sécurité non activé (position usuelle), les figures 2A et 2B correspondant à l'airbag commençant à se déployer, et la figure 3 correspondant à la fin du déploiement de l'airbag.

La figure 1A représente un agencement d'une planche de bord d'un véhicule automobile, qui est installée, supportée transversalement par une traverse structurelle 7 (direction Y), et qui s'étend sensiblement longitudinalement à l'avant des sièges avant dans l'habitacle et à l'arrière du pare-brise (non représentés). Sur

la figure 1A, certains éléments sont représentés un peu espacés les uns des autres pour une meilleure lisibilité de la figure 1A.

La figure 1A est une vue en coupe longitudinale (direction X) dans le plan vertical XZ d'un agencement côté passager de l'habitacle.

Selon l'exemple, un écran 8 est implanté sur la planche de bord, face au passager avant, ledit agencement étant implanté à l'arrière de cet écran.

La planche de bord comprend un corps structurel 2 comportant une paroi ayant une partie avant 21 et une partie arrière 22. Une façade 9 est disposée sur la partie arrière 22 de la paroi, cette façade comporte par exemple un aérateur.

L'agencement de planche de bord comprend un ensemble décoratif 1 comportant un support de décor 10 et un revêtement décoratif 11 dont est revêtu ledit support 10. Le support de décor 10 comprend une première face (face supérieure) et une deuxième face (face inférieure) opposée à la première face, le revêtement décoratif 11 étant disposé sur la face supérieure.

Ledit corps de planche de bord comprend un logement 41 comportant deux parois droites 413, 413' qui supportent dans l'espace entre elles un système de sécurité à coussin gonflable 5, cet espace débouchant dans une ouverture 20 traversante réalisée dans la paroi du corps structurel de la planche de bord. Le logement 41 comprend des ailes de fixation latérales 411, 412 s'étendant sensiblement perpendiculairement auxdites parois droites 413, 413', permettant sa fixation à la paroi 21, 22 du corps structurel de planche de bord, par exemple par des vis ou clips, de part et d'autre de l'ouverture 20 (comme indiqué schématiquement par les parties entourées désignées par les signes de référence 42, 43 sur la Fig.3). Cette ouverture 20 est fermée par un volet unique 410, en extrémité supérieure du système de sécurité 5. L'ouverture 20 constitue une ouverture de sortie du coussin 50 en déploiement. Ce logement 41 muni du volet 410 et l'ouverture 20 de sortie de coussin définissent le canal de déploiement 4 de l'airbag.

Le volet 410 est mobile solidairement à l'une 413 des deux parois droites du logement 41, par le biais d'un élément de solidarisation arrière 400, par exemple un filet, formant une charnière lâche permettant le basculement du volet tout en le retenant, afin qu'il puisse s'ouvrir de l'arrière vers l'avant sous la poussée du coussin en déploiement lors du déclenchement du système de sécurité, pour livrer passage audit coussin.

Le volet 410 peut être intégré au logement 41 de l'airbag, son côté, opposé à celui maintenu par le filet, étant solidarisé suivant une ligne amincie dans son épaisseur la rendant apte à être rompue sous la poussée du coussin en déploiement.

Ledit ensemble décoratif 1 est disposé, selon la deuxième face du support de décor 10, sur la paroi dudit corps structurel 2 de planche de bord, une zone de l'ensemble décoratif 1 recouvrant ledit canal de déploiement de l'airbag, notamment le volet 410, au-dessus de l'ouverture 20 dans la paroi du corps structurel.

Ledit ensemble décoratif 1 est solidarisé à la paroi dudit corps structurel de planche de bord, notamment de part et d'autre de l'ouverture 20 du canal de déploiement de l'airbag, par des moyens de retenue libérables, sous la poussée « F » du volet 410 (et indirectement du coussin 50 en déploiement qui pousse le volet) lors du déclenchement du système de sécurité, sortant du canal de déploiement.

Le détail A des moyens de retenue libérables de la figure 1A est représenté schématiquement en Fig.1B, quand le système de sécurité à coussin de gonflage est inactivé. Ces moyens de retenue comprennent un élément de retenue 12 et un logement de retenue 24 complémentaire. Cet élément de retenue 12 est solidarisé en face inférieure (deuxième face) du support de décor 10, et il a une forme en crochet comportant une extrémité 120 allongée dirigée vers l'avant, munie d'une partie flexible 121. Le logement de retenue 24, de type encoche, est formé dans la paroi du corps de la planche de bord en vis-à-vis, et il a une forme complémentaire d'accueil de l'extrémité 120, 121 dudit élément de retenue 12.

Ledit élément de retenue 12 est inséré à force dans ledit logement de retenue 24, suivant un mouvement de direction longitudinale de l'ensemble décoratif 1 par rapport au corps de planche de bord. L'ensemble décoratif 1 est ainsi retenu par clippage à la paroi du corps structurel de planche de bord. Il peut y avoir quatre éléments de retenue 12 et quatre logements de retenue 24 correspondants répartis entre l'ensemble décoratif 1 et le corps de planche de bord, afin d'assurer une bonne solidarisation de l'ensemble décoratif 1 au corps de planche de bord. Deux desdits moyens de retenue libérables sont espacés l'un de l'autre et proximaux de l'extrémité arrière du support de décor 10 et les deux autres sont espacés l'un de l'autre et situés entre l'avant du canal de déploiement 4 du système de sécurité et des liaisons charnière 3 retenant l'ensemble décoratif 1 à la partie de paroi avant 21 du corps structurel décrites plus loin.

Le détail A' des moyens de retenue libérables de la figure 2A est représenté schématiquement en Fig.2B, quand le système de sécurité à coussin de gonflage est activé. Les moyens de retenue 12, 24 libérables se désolidarisent sous la poussée « F » du volet 410 poussé par le coussin 50 en déploiement lors du déclenchement du système de sécurité, l'élément de retenue 12 dudit ensemble décoratif 1 sortant de son logement de retenue 24 dudit corps structurel de planche de bord.

De plus, l'agencement comporte deux pions de retenue 6 de l'ensemble décoratif 1 à la paroi du corps structurel, aussi libérables quand le système de sécurité à coussin de gonflage est activé. Chaque pion 6 est situé à proximité et à l'arrière de l'écran 8 selon l'exemple. Le pion de retenue 6 comporte une extrémité 61 qui est fixée au support de décor 10, et son autre extrémité 62, qui est libre, est insérée dans la partie de paroi avant 21 du corps structurel en vis-à-vis, de manière à ce que l'ensemble décoratif 1 soit maintenu au corps structurel de la planche de bord, quand le système de sécurité à coussin de gonflage est inactivé. Ce pion 6 comporte une partie droite dont l'extrémité 61 est fixée au support de décor 10 et une partie recourbée, presque à angle droit avec la partie droite 61 et dirigée vers l'avant, terminée par l'extrémité libre 62, insérée dans la partie de paroi avant 21 du corps structurel.

Ces pions de retenue 6 ont ainsi la même direction d'introduction dans leur logement respectif du corps structurel que les autres crochets de retenue 12. Ceci facilite le montage et la fixation de l'ensemble décoratif 1 sur le corps structurel, et permet la libération des différents éléments de retenue lors du déclenchement du système de sécurité.

Ces pions de retenue 6, selon l'exemple, facilitent aussi le centrage de l'ensemble décoratif 1 lors de sa pose, par clippage des différents éléments de retenue, en enfilant les divers éléments de retenue 12 dans leurs logements 24 respectifs du corps structurel, suivant un mouvement de l'élément décoratif 1 de l'arrière vers l'avant du corps de la planche de bord. Ces pions de retenue 6, assez massifs, apportent aussi de la tenue aux vibrations.

En outre, la partie avant dudit ensemble décoratif 1, proximale et à l'arrière de l'écran 8 selon l'exemple, est fixée à une partie de paroi avant 21 dudit corps structurel de planche de bord par deux liaisons charnière 3 comportant chacune une sangle 31 proximale d'undit pion de retenue 6. Ladite sangle 31 est fixée entre la paroi du corps structurel, par exemple par un élément de fixation à vis 30, et l'extrémité avant dudit ensemble décoratif 11, par exemple par fixation entre le support de décor 10 et le revêtement décoratif 11.

Chaque liaison charnière 3 autorise un basculement de l'ensemble décoratif 1 vers l'avant de l'habitacle, par rapport au corps structurel de la planche de bord, quand le système de sécurité à coussin gonflage est activé. Ledit ensemble décoratif 1 étant solidarisé audit corps structurel de planche de bord, à l'arrière de ladite liaison charnière 3 par des moyens de retenue 12, 24 libérables sous la poussée « F » du volet 410 poussé par le coussin 50 en déploiement lors du déclenchement du système de sécurité, de sorte que ledit ensemble décoratif 1 est désolidarisé de la paroi du corps structurel à l'arrière (direction X) de la liaison charnière 3 par libération des moyens de retenue 12, 24 et entrainé en basculement vers l'avant de l'habitacle, sous la poussée du coussin en déploiement lors du déclenchement du système de sécurité, le pion de retenue 6 étant également désolidarisé de la paroi du corps structurel, son extrémité libre 62 sortant de son logement. L'ensemble décoratif 1 se retrouve alors basculé plus ou moins à la verticale. L'extrémité avant dudit ensemble décoratif 1 est retenue par la sangle 31, en tension maximale, à la paroi (partie de paroi avant 21) du corps structurel, ce qui évite que l'ensemble décoratif 1 soit totalement libéré au risque d'être projeté dans l'habitacle (voir Fig. 3).

L'ensemble décoratif 1 peut être maintenu sans être détruit lorsque l'airbag est déclenché.

L'invention présente l'avantage que tout type de revêtement décoratif peut être appliqué. Le revêtement peut comporter une ou plusieurs couches de matière, et les matériaux utilisés peuvent être variés, par exemple en matériau texturé ou en tissu.

Selon l'exemple, et un mode préféré de l'invention, le revêtement décoratif 11 comprend au moins une couche de mousse, et un effet décoratif superficiel, par exemple structuré, pouvant être superposé à cette couche de mousse. L'invention évite que la couche de mousse soit déchiquetée en morceaux qui pourraient se disséminer dans l'habitacle, au risque d'être inspirés par les passagers, lors du déploiement de l'airbag.

L'invention présente l'avantage que le revêtement décoratif de la planche de bord peut être identique sur toute sa surface. La partie de la planche de bord, hors de l'agacement décrit qui convient plus particulièrement à la partie latérale de la planche de bord côté passager avant, à l'arrière du pare-brise et en direction du siège passager avant, peut en effet comporter un décor identique à celui du revêtement décoratif dudit agencement comportant un airbag.

L'invention est décrite avec des moyens de retenue libérables s'insérant à force, de type clips, aptes à se déclipper, toutefois des moyens de retenue libérables en se cassant par exemple suivant des parties sécables, ou en se déboîtant ou se déformant, sous la poussée du volet du canal de déploiement de l'airbag, peuvent convenir. Les moyens de retenue cassés peuvent être facilement remplacés pour réinstaller la planche de bord.

## Revendications

1. Agencement d'une planche de bord comportant un système de sécurité à coussin gonflable, configuré pour s'étendre dans l'habitacle d'un véhicule automobile, en particulier à l'arrière du pare-brise et en direction du siège passager avant, ledit agencement comprenant :
- un corps structurel comportant une paroi ayant une partie avant (21) et une partie arrière (22), une zone ouverte (20) et/ou une zone frangible aptes à déboucher dans ladite paroi du corps structurel, et au moins un logement (41) qui loge ledit système de sécurité à coussin gonflable (5) avec un volet (410) fermant au moins en partie ladite zone ouverte (20) et/ou situé sous ladite zone frangible et étant apte à s'ouvrir par basculement dirigé de l'arrière vers l'avant, autour d'un élément de solidarisation (400) retenant ledit volet, sous la poussée du coussin en déploiement lors du déclenchement du système de sécurité, ledit logement avec ledit volet et ladite zone ouverte (20) et/ou ladite zone frangible définissant un canal de déploiement (4) dudit système de sécurité positionné à l'arrière de ladite partie de paroi avant du corps structurel,
- un ensemble décoratif (1) comportant un support de décor (10) comprenant une première et une deuxième face opposées, et un revêtement décoratif (11) revêtant la première face dudit support de décor, et la deuxième face dudit support de décor étant disposée sur ladite paroi dudit corps structurel de sorte qu'une zone de l'ensemble décoratif recouvre ledit canal de déploiement (4) du système de sécurité, et ledit ensemble décoratif (1) étant solidarisé à la paroi dudit corps structurel par des moyens de retenue (12, 24, 6) libérables sous la poussée du volet (410) lors du déclenchement du système de sécurité, et l'extrémité avant dudit ensemble décoratif (1) étant maintenue à la partie de paroi avant (21) dudit corps structurel par au moins une liaison charnière (3) autorisant un basculement de l'ensemble décoratif (1) dirigé de l'arrière vers l'avant sous la poussée du volet (410) lors du déclenchement du système de sécurité en le retenant à la partie de paroi avant (21) dudit corps structurel.

2. Agencement d'une planche de bord selon la revendication 1, **caractérisé en ce que** lesdits moyens de retenue libérables comprennent des éléments de retenue (12) supportés par la deuxième face du support de décor, chaque dit élément de retenue comportant une extrémité (120) allongée, dirigée vers l'avant, s'insérant à force dans des logements (24) respectifs prévus dans la paroi du corps structurel, lesdits logements comportant chacun une partie de forme allongée complémentaire de celle de ladite extrémité de l'élément de retenue.

3. Agencement d'une planche de bord selon la revendication 2, **caractérisé en ce qu'**il comprend au moins deux moyens de retenue libérables espacés l'un de l'autre et proximaux de l'extrémité arrière du support de décor (10) et au moins deux autres moyens de retenue libérables espacés l'un de l'autre et situés entre l'avant du canal de déploiement (4) du système de sécurité et ladite au moins une liaison charnière (3) retenant l'ensemble décoratif (1) à la partie de paroi avant (21) du corps structurel.

4. Agencement d'une planche de bord selon l'une quelconque des revendications 1 à 3, **caractérisé en ce que** le revêtement décoratif (11) comprend au moins une couche de matière souple, en particulier de type mousse.

5. Agencement d'une planche de bord selon l'une quelconque des revendications 1 à 4, **caractérisé en ce que** ladite liaison charnière (3) retenant l'ensemble décoratif (1) à la partie de paroi avant (21) du corps structurel comprend une sangle (31) fixée d'une part à la paroi du corps structurel et d'autre part à l'ensemble décor (1).

6. Agencement d'une planche de bord selon l'une quelconque des revendications 1 à 5, **caractérisé en ce que** le support de décor (10) est en une matière rigide.

7. Véhicule automobile comprenant une planche de bord **caractérisé en ce que** ladite planche de bord comprend au moins un agencement selon l'une quelconque des revendications 1 à 6, ledit agencement s'étendant au moins sur une partie latérale de la planche de bord, et en particulier à l'arrière du pare-brise et en direction du siège passager avant.

8. Véhicule automobile comprenant une planche de bord selon la revendication 7, ladite planche de bord s'étendant transversalement sur toute la largeur de l'habitacle à l'arrière du pare-brise, ladite planche de bord comportant un décor, au moins sur toute sa surface libre, identique à celui du revêtement décoratif dudit agencement.

## Patentansprüche

1. Anordnung eines Armaturenbretts, das ein Sicherheitssystem mit Airbag aufweist, die dazu ausgestaltet ist, sich im Innenraum eines Kraftfahrzeugs, insbesondere hinter der Windschutzscheibe und in Richtung des Beifahrervordersitzes, zu erstrecken, wobei die Anordnung umfasst:
- einen strukturellen Körper, der eine Wand aufweist, die einen vorderen Teil (21) und einen hinteren Teil (22), einen offenen Bereich (20) und/oder einen Sollbruchbereich hat, die geeignet sind, in der Wand des strukturellen Körpers zu münden, und mindestens eine Aufnahme (41), die das Sicherheitssystem mit Airbag (5) aufnimmt, mit einer Klappe (410), die den offenen Bereich mindestens teilweise verschließt (20) und/oder unter dem Sollbruchbereich gelegen ist und geeignet ist, sich durch von hinten nach vorn gerichtetes Kippen um ein die Klappe zurückhaltendes Befestigungselement (400) herum unter dem Schub des sich beim Auslösen des Sicherheitssystems entfaltenden Airbags zu öffnen, wobei die Aufnahme mit der Klappe und der offenen Bereich (20) und/oder der Sollbruchbereich einen Entfaltungskanal (4) des Sicherheitssystems bilden, der hinter dem vorderen Wandteil des strukturellen Körpers positioniert ist,
- eine dekorative Einheit (1), die einen Dekorträger (10), der eine erste und eine zweite Seite, die entgegengesetzt sind, umfasst, und einen dekorativen Überzug (11), der die erste Seite des Dekorträgers überzieht, aufweist, und wobei die zweite Seite des Dekorträgers an der Wand des strukturellen Körpers so angeordnet ist, dass ein Bereich der dekorativen Einheit den Entfaltungskanal (4) des Sicherheitssystems überzieht, und wobei die dekorative Einheit (1) an der Wand des strukturellen Körpers durch Rückhaltemittel (12, 24, 6) befestigt ist, die unter dem Schub der Klappe (410) beim Auslösen des Sicherheitssystems freigebbar sind, und wobei das vordere Ende der dekorativen Einheit (1) an dem vorderen Wandteil (21) des strukturellen Körpers durch mindestens eine Scharnierverbindung (3) gehalten wird, die ein von hinten nach vorn gerichtetes Kippen der dekorativen Einheit (1) unter dem Schub der Klappe (410) beim Auslösen des Sicherheitssystems zulässt, wobei es sie an dem vorderen Wandteil (21) des strukturellen Körpers zurückhält.

2. Anordnung eines Armaturenbretts nach Anspruch 1, **dadurch gekennzeichnet, dass** die freigebbaren Rückhaltemittel Rückhalteelemente (12) umfassen, die von der zweiten Seite des Dekorträgers getragen werden, wobei jedes Rückhalteelement ein längliches, nach vorn gerichtetes Ende (120) aufweist, das sich mit Kraft in jeweilige Aufnahmen (24), die in der Wand des strukturellen Körpers vorgesehen sind, einführen lässt, wobei die Aufnahmen jeweils einen Teil von länglicher Form aufweisen, die komplementär zu der des Endes des Rückhalteelements ist.

3. Anordnung eines Armaturenbretts nach Anspruch 2, **dadurch gekennzeichnet, dass** sie mindestens zwei freigebbare Rückhaltemittel umfasst, die voneinander beabstandet sind und proximal zu dem hinteren Ende des Dekorträgers (10) sind, und mindestens zwei weitere freigebbare Rückhaltemittel, die voneinander beabstandet sind und zwischen der Vorderseite des Entfaltungskanals (4) des Sicherheitssystems und der mindestens einen Scharnierverbindung (3), die die dekorative Einheit (1) an dem vorderen Wandteil (21) des strukturellen Körpers zurückhält, gelegen sind.

4. Anordnung eines Armaturenbretts nach einem der Ansprüche 1 bis 3, **dadurch gekennzeichnet, dass** der dekorative Überzug (11) mindestens eine Schicht aus weichem Material, insbesondere vom Schaumstofftyp, umfasst.

5. Anordnung eines Armaturenbretts nach einem der Ansprüche 1 bis 4, **dadurch gekennzeichnet, dass** die Scharnierverbindung (3), die die dekorative Einheit (1) an dem vorderen Wandteil (21) des strukturellen Körpers hält, einen Gurt (31) umfasst, der zum einen an der Wand des strukturellen Körpers und zum anderen an der dekorative Einheit (1) befestigt ist.

6. Anordnung eines Armaturenbretts nach einem der Ansprüche 1 bis 5, **dadurch gekennzeichnet, dass** der Dekorträger (10) aus einem starren Material ist.

7. Kraftfahrzeug, das ein Armaturenbrett umfasst, **dadurch gekennzeichnet, dass** das Armaturenbrett mindestens eine Anordnung nach einem der Ansprüche 1 bis 6 umfasst, wobei sich die Anordnung mindestens über einen seitlichen Teil des Armaturenbretts und insbesondere hinter der Windschutzscheibe und in Richtung des Beifahrervordersitzes erstreckt.

8. Kraftfahrzeug, das ein Armaturenbrett nach Anspruch 7 umfasst, wobei sich das Armaturenbrett quer über die gesamte Breite des Innenraums hinter der Windschutzscheibe erstreckt, wobei das Armaturenbrett mindestens auf seiner gesamten freien Oberfläche ein Dekor aufweist, das mit dem des dekorativen Überzugs der Anordnung identisch ist.

## Claims

1. Arrangement of a dashboard comprising an inflatable airbag safety system, configured to extend into the passenger compartment of a motor vehicle, in particular behind the windscreen and toward the front passenger seat, said arrangement comprising:
- a structural body comprising a wall having a front portion (21) and a rear portion (22), an open zone (20) and/or a frangible zone opening into said wall of the structural body, and at least one housing (41) containing said inflatable airbag safety system (5) with a flap (410) which at least partially closes said open zone (20) and/or which is located beneath said frangible zone and can be opened by tilting from the rear to the front, about an attachment element (400) retaining said flap, under the deployment force of the airbag when the safety system is triggered, said housing with said flap and said open zone (20) and/or said frangible zone defining a deployment channel (4) of said safety system positioned behind said front wall portion of the structural body,
- a trim assembly (1) comprising a trim support (10) comprising a first face and a second face that are opposed, and a decorative covering (11) covering the first face of said trim support, and the second face of said trim support being arranged on said wall of said structural body such that a zone of the trim assembly covers said deployment channel (4) of the safety system, and said trim assembly (1) being secured to the wall of said structural body by retaining means (12, 24, 6) releasable under the force of the flap (410) when the safety system is triggered, and the front end of said trim assembly (1) being held on the front wall portion (21) of said structural body by at least one hinge connection (3) allowing the trim assembly (1) to be tilted from the rear to the front under the force of the flap (410) when the safety system is triggered while remaining attached to the front wall portion (21) of said structural body.

2. Arrangement of a dashboard according to Claim 1, **characterized in that** said releasable retaining means comprise retaining elements (12) supported by the second face of the trim support, each of said retaining elements having an elongate end (120) directed forward and press-fitted into respective housings (24) in the wall of the structural body, said housings each having a portion of elongate shape complementary to the shape of said end of the retaining element.

3. Arrangement of a dashboard according to Claim 2, **characterized in that** it comprises at least two releasable retaining means spaced apart from each other and near to the rear end of the trim support (10) and at least two other releasable retaining means spaced apart from each other and located between the front of the deployment channel (4) of the safety system and said at least one hinge connection (3) attaching the trim assembly (1) to the front wall portion (21) of the structural body.

4. Arrangement of a dashboard according to any one of Claims 1 to 3, **characterized in that** the decorative covering (11) comprises at least one layer of flexible material, in particular foam.

5. Arrangement of a dashboard according to any one of Claims 1 to 4, **characterized in that** said hinge connection (3) attaching the trim assembly (1) to the front wall portion (21) of the structural body comprises a strap (31) fastened both to the wall of the structural body and to the trim assembly (1).

6. Arrangement of a dashboard according to any one of Claims 1 to 5, **characterized in that** the trim support (10) is made of a rigid material.

7. Motor vehicle comprising a dashboard, **characterized in that** said dashboard comprises at least one arrangement according to any one of Claims 1 to 6, said arrangement extending at least over a lateral portion of the dashboard, and in particular behind the windscreen and towards the front passenger seat.

8. Motor vehicle comprising a dashboard according to Claim 7, said dashboard extending transversely over the entire width of the passenger compartment behind the windscreen, said dashboard comprising a decorative finish, at least over the entire free surface thereof, that is identical to the decorative finish of the decorative covering of said arrangement.
